# EUROPEAN PATENT SPECIFICATION

(11) **EP 2 466 677 B1**
(45) Date of publication and mention of the grant of the patent: **10.07.2013**
(21) Application number: 11193644.9
(22) Date of filing: 15.12.2011
(51) Int. Cl.: H01M 8/06, H01M 8/04, H01M 8/12

(54) **Fuel cell system**
Brennstoffzellensystem
Système de pile à combustible

(30) Priority: 20.12.2010 JP 2010282961
(43) Date of publication of application: 20.06.2012
(73) Proprietor: Aisin Seiki Kabushiki Kaisha, Aichi 448-8650 (JP); TOYOTA JIDOSHA KABUSHIKI KAISHA, Toyota-shi, Aichi-ken, 471-8571 (JP)
(72) Inventor: Yabutani, Motohiko, Kariya-shi, Aichi 448-8650 (JP)
(74) Representative: TBK

(56) References cited:
- WO-A1-2010/113519
- JP-A- 2007 335 332
- JP-A- 2008 273 822
- JP-A- 2010 238 591
- US-A1- 2006 014 062

## Description

### TECHNICAL FIELD

This disclosure generally relates to a fuel cell system.

### BACKGROUND DISCUSSION

A known fuel cell system generally includes a fuel cell, an evaporating portion evaporating water so as to generate water vapor, and a reforming portion reforming a fuel by using the water vapor generated at the evaporating portion to thereby form an anode fluid. The fuel cell system further includes a tank storing the water supplied to the evaporating portion, a supply passage supplying the water in the tank to the evaporating portion, and a pump provided at the supply passage so as to transmit the water. In a case where the pump Is driven, the water stored within the tank is transmitted to the supply passage and is supplied to the evaporating portion at a high temperature, which results in the water vapor at the evaporating portion. The water vapor is supplied to the reforming portion so that the fuel is reformed by the water vapor and is formed into the anode fluid (a hydrogen containing gas). According to the aforementioned system, in a case of starting a power generating operation, timing to supply the water (the water vapor) to the reforming portion is important.

JP2008-243594A (which will be hereinafter referred to as Reference 1) discloses a fuel cell apparatus including a temperature sensor in a reformer. Then, whether water exists in the reformer or not is detected on a basis of an output value of the temperature sensor. In a case where the temperature sensor shows the temperature to be lower than an ambient temperature of a water supply portion provided within the reformer, it is determined that the water Is stored or present In the reformer. In a case where the temperature sensor shows the temperature to be substantially equal to the ambient temperature of the water supply portion within the reformer, it is determined that the water is not stored or present in the reformer.

JP2008-159466A (which will be hereinafter referred to as Reference 2) discloses a fuel cell apparatus including a flow switch between a reformer and a shot pump that supplies water for reforming. The flow switch detects an intermittent flow from the shot pump and outputs a detection signal, based on which an amount of supply of the water per time unit is calculated.

JP2004-288505A (which will be hereinafter referred to as Reference 3) discloses a reformer for a fuel cell including a sensor that detects a change in water level in a tank for storing the water that serves as a source of water vapor. A feedback control is performed on a driving of a pump based on the change In water level in the tank to thereby adjust the flow amount of the water supplied to an evaporating portion of the reformer.

JP2005-276544A (which will be hereinafter referred to as Reference 4) discloses a fluid transmission control system including a pressure sensor within a tank where water serving as a source of water vapor is stored. The pressure sensor monitors a change in pressure of the water in the tank so that a feedback control is performed on a driving of a pump on a basis of a signal from the pressure sensor.

JP2008-273822A (which will be hereinafter referred to as Reference 5) discloses a fuel cell system in which water discharged from a pump that supplies water, serving as a source of water vapor, to a reformer is returned to a water tank at a start of driving the pump. Afterwards, a circuit is changed so as to transmit the water to the reformer to thereby restrain air contained in the water from flowing into the reformer at the start of the pump.

According to techniques disclosed in References 1 to 5, at the start of the power generating operation, timing to supply the water, which is formed into the water vapor for reforming the fuel, to the evaporating portion and further the reforming portion Is important. In a case where the timing to supply the water to the evaporating portion and the reforming portion is delayed, a water supply to the evaporating portion is delayed, which may result In an excessively high temperature of the reforming portion. In this case, coking (i.e., carbonization of fuel) may occur at the reforming portion, which may lead to a deterioration of a reforming catalyst. On the other hand, in a case where the timing to supply the water to the evaporating portion and the reforming portion is relatively fast, an excessive water leakage may occur at the reforming portion, which may lead to a reduction in a reforming catalyst activity.

A need thus exists for a fuel cell system which appropriately specifies timing to supply water that is formed into water vapor for reforming a fuel to an evaporating portion and a reforming portion at a start of a power generating operation of the fuel cell system, and which restrains a coking and an excessive water leakage at the reforming portion).

### SUMMARY

According to an aspect of this disclosure, a fuel cell system includes a fuel cell Including an anode and a cathode and generating an electric power In a state where an anode fluid is supplied to the anode while a cathode fluid is supplied to the cathode, a combusting portion starting a combustion by an ignition, an evaporating portion including an Inlet port and generating a water vapor by evaporating water by a heat of the combusting portion, a reforming portion forming the anode fluid by reforming a fuel by using the heat of the combusting portion and the water vapor generated at the evaporating portion, a tank including an outlet port and storing the water supplied to the evaporating portion, a supply passage connecting the outlet port of the tank and the inlet port of the evaporating portion and allowing a supply of the water to the evaporating portion from the tank via the inlet port of the evaporating portion, a water sensor arranged at the supply passage and detecting a water level of the water positioned away from the inlet port of the evaporating portion by a predetermined distance, a water supply source provided at the supply passage and driven to transmit the water In the tank to the evaporating portion to generate the water vapor, and a control portion controlling the water supply source. At a start of a power generation of the fuel cell, the control portion instructs the water supply source to operate so that the water in the tank is supplied to the supply passage in a state where a water accommodating void is formed at the supply passage. The control portion performs a water level set process by controlling the operation of the water supply source so that the water level of the water in the supply passage is specified at a position by the predetermined distance away from the inlet port of the evaporating portion while monitoring the water level of the water in the supply passage based on a detection signal of the water sensor.

Accordingly, at the time of the power generation of the fuel cell system, timing to supply the fuel to the reforming portion and timing to supply the water to the evaporating portion appropriately conform to each other. Thus, the timing to supply the water to the evaporating portion after the ignition of the combusting portion is restrained from being delayed. As a result, a possibility of coking (i.e., carbonization of fuel) at the reforming portion is restrained, which may decrease the deterioration of a reforming catalyst. Alternatively, after the ignition of the combusting portion, the timing to supply the water to the evaporating portion is restrained from being too late, which may decrease a possibility of an excessive water leakage at the reforming portion.

The control portion performs a process to return the water in the supply passage to the tank by instructing the water supply source to operate in a reverse mode at a start of the water level set process.

When the water remaining in the supply passage is returned to the tank as mentioned above, grit or dust, for example, is accumulated on a bottom portion of the tank. Thus, the grit or dust is restrained from being supplied to the reforming portion via the evaporating portion, which further protects the reforming catalyst of the reforming portion, for example. Further, in a case where the water is maintained In the supply passage for a long time period, quality of the water in the supply passage may fluctuate. However, according to the disclosure, the water is returned to the tank so as to be diluted by the water In the tank.

At the start of the power generation of the fuel cell, before an elapse of a first predetermined time from a time when the fuel cell system stops the power generation, the control portion allows the ignition of the combusting portion without performing the water level set process, and after the elapse of the first predetermined time from the time when the fuel cell system stops the power generation, the control portion performs the water level set process and then allows the ignition of the combusting portion.

Before the elapse of the first predetermined time, because the decrease of the water level of the water in the supply passage is small, the control portion allows the ignition of the combusting portion without performing the water level set process. At this time, because the water level set process is not performed, the power generation is immediately performed after a command to start the power generation of the fuel cell system is output. On the other hand, after the elapse of the first predetermined time from the time when the operation of the fuel cell system is stopped, the decrease of the water level of the water is large and is not negligible. The control portion desirably recognizes the water level of the water highly accurately. Thus, after the elapse of the first predetermined time from the time when the operation of the fuel cell system is stopped, the control portion performs the water level set process so that the ignition of the combusting portion is allowed after the water level of the water in the supply passage is specified to the predetermined position.

The fuel cell system further includes a reference temperature sensor detecting a reference temperature of the reforming portion, wherein at the start of the power generation of the fuel cell, the control portion allows the ignition of the combusting portion without performing the water level set process in a case where a temperature detected by the reference temperature sensor is equal to or greater than a threshold temperature, and the control portion performs the water level set process and then allows the ignition of the combusting portion in a case where the temperature detected by the reference temperature sensor is smaller than the threshold temperature.

In a case where the temperature at the reforming portion 3 detected by the reference temperature sensor is equal to or greater than the threshold temperature at the start of the power generation of the fuel cell, it is considered that the elapse of time from the stop of the fuel cell system is short and therefore the decrease of the water level of the water in the supply passage is small. Thus, the control portion allows the ignition of the combusting portion without performing the water level set process. On the other hand, when the temperature at the reforming portion 3 detected by the reference temperature sensor is smaller than the threshold value, the elapse of time from the stop of the fuel cell system is long and therefore the decrease of the water level of the water is large. Thus, the control portion performs the water level set process so as to specify the water level of the water to the predetermined position in the vicinity of the inlet port of the evaporating portion and thereafter allows the ignition of the combusting portion.

The control portion performs a deceleration process decelerating a water supply speed of the water supply source while the water level set process is being performed.

Accordingly, the water level of the water is easily specified to the predetermined position in the vicinity of the inlet port of the evaporating portion in the supply passage.

The control portion performs an abort process to temporarily stop a water supply performed by the water supply source and then to resume the water supply while the water level set process is being performed.

Accordingly, even when an air foam is included in the supply passage, the temporary stop of the water supply to the supply passage and the restart thereof may expect the air foam to float at an upper side of the water surface of the supply passage. In this case, while avoiding an influence of the air foam, the water level of the water is highly accurately specified to the predetermined position in the vicinity of the inlet port of the evaporating portion in the supply passage.

The predetermined distance corresponds to a distance from the inlet port of the evaporating portion to a point on the supply passage, and the predetermined distance is defined to be in a range from 0.01 to 15 in a state where an entire length of the supply passage from the inlet port of the evaporating portion to the outlet port of the tank is defined to be 100.

The control portion performs the water level set process before the combusting portion is ignited.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram of a fuel cell system according to a first embodiment disclosed here;

Fig. 2 is a schematic view illustrating a portion around a water level sensor provided in the vicinity of an inlet port of an evaporating portion in a supply passage;

Fig. 3 is another schematic view illustrating the portion around the water level sensor provided in the vicinity of the inlet port of the evaporating portion in the supply passage;

Fig. 4 is a flowchart of a water level set process performed by a control portion according to a fifth embodiment disclosed here;

Fig. 5 is a flowchart of the water level set process performed by the control portion according to a sixth embodiment disclosed here; and

Fig. 6 is a flowchart of the water level set process performed by the control portion according to a seventh embodiment disclosed here.

### DETAILED DESCRIPTION

### [First embodiment]

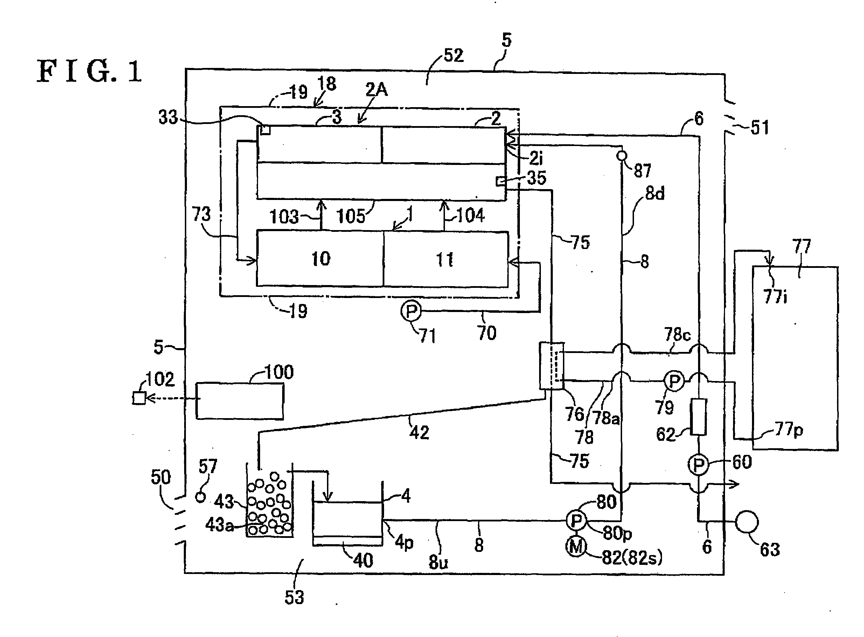

A first embodiment will be explained with reference to Figs. 1 to 3. As illustrated in Fig. 1, a fuel cell system includes a fuel cell 1, an evaporating portion 2, a reforming portion 3, a combusting portion 105, a tank 4, and a case 5. The evaporating portion 2 evaporates water in a liquid phase so as to generate water vapor. The reforming portion 3 reforms fuel by using the water vapor generated at the evaporating portion 2. The combusting portion 105 heats up the evaporating portion 2 and the reforming portion 3. The tank 4 stores the water supplied to the evaporating portion 2. The case 5 accommodates the fuel cell 1, the evaporating portion 2, the reforming portion 3, the combusting portion 105, and the tank 4. The fuel cell 1 includes an anode 10 and a cathode 11 sandwiching therein an ionic conductor. For example, a solid oxide fuel cell (SOFC; an operation temperature is equal to or greater than 400 °C, for example) is applicable to the fuel cell 1. An anode exhaust gas discharged from the anode 10 is supplied to the combusting portion 105 via an anode exhaust gas passage 103. A cathode exhaust gas discharged from the cathode 11 is supplied to the combusting portion 105 via a cathode exhaust gas passage 104. The combusting portion 105 burns the anode exhaust gas and the cathode exhaust gas so as to heat up the evaporating portion 2 and the reforming portion 3. An exhaust combustion gas passage 75 is provided at the combusting portion 105 so as to emit an exhaust combustion gas into air via the exhaust combustion gas passage 75. The exhaust combustion gas includes a gas after the combustion and unburnt gas at the combusting portion 105.

The reforming portion 3 is formed by a carrier such as ceramics on which a reforming catalyst is carried. The reforming portion 3 is arranged next to the evaporating portion 2 so as to constitute a reformer 2A together with the evaporating portion 2. The reformer 2A and the fuel cell 1 are surrounded by an insulated wall 19 to thereby form a power generation module 18. A reference temperature sensor 33 detecting a temperature of the reforming portion 3 is provided at an inner side of the reforming portion 3. In addition, an ignition portion 35 serving as a heater for igniting the fuel is provided at an inner side of the combusting portion 105. The ignition portion 35 may have any structure as long as the ignition portion 35 ignites the fuel in the combusting portion 105. A signal from the reference temperature sensor 33 is input to a control portion 100. The reference temperature corresponds to a temperature based on which it is determined whether or not a water level (a height) set process (which will be explainer later) is performed. The control portion 100 controls the ignition portion 35 to operate so that the combusting portion 105 is ignited and heated up. The control portion 100 includes an alarm 102.

In a power generating operation of the fuel cell system (the fuel cell 1), the reformer 2A is heated up within the insulated wall 19 so as to be suitable for a reforming reaction. In the power generating operation, the evaporating portion 2 is heated up so as to heat the water to obtain the water vapor. In a case where the fuel cell 1 is the SOFC, the anode exhaust gas discharged from the anode 10 and the cathode exhaust gas discharged from the cathode 11 are burnt at the combusting portion 105. As a result, the reforming portion 3 and the evaporating portion 2 are heated up at the same time. A fuel passage 6 through which the fuel from a fuel source 63 is supplied to the reformer 2A includes a fuel pump 60 and a desulfurizer 62. A cathode fluid passage 70 is connected to the cathode 11 of the fuel cell 1 so as to supply a cathode fluid (air) to the cathode 11. A cathode pump 71 is provided at the cathode fluid passage 70 so as to function as a supply source transmitting the cathode fluid.

As illustrated In Fig. 1, the case 5 includes an Intake port 50 and an exhaust port 51 connected to an outside air. Further, the case 5 includes an upper void 52 provided at an upper side of the case 5 and serving as a first chamber, and a lower void 53 provided at a lower side of the case 5 and serving as a second chamber. The fuel cell 1, the reforming portion 3, and the evaporating portion 2 are accommodated in the upper void 52. The tank 4 storing the water that is reformed at the reforming portion 3 is accommodated in the lower void 53. A heating portion 40 such as an electric heater having a heating function is provided at the tank 4. The heating portion 40 formed by the electric heater, for example, heats up the water stored in the tank 4. In a case where an ambient temperature such as an outside temperature is low, the water in the tank 4 is heated up to or above a predetermined temperature (for example, 5 °C, 10 °C, or 20 °C) by the heating portion 40 based on a command from the control portion 100 to thereby avoid freezing.

As illustrated in Fig. 1, a supply passage 8 serving as a conduit is provided within the case 5 so as to connect an outlet port 4p of the tank 4 in the lower void 53 to an inlet port 2i of the evaporating portion 2 in the upper void 52. Because the tank 4 is arranged at a lower side of the evaporating portion 2 within the case 5, the supply passage 8 basically substantially extends in a vertical direction.

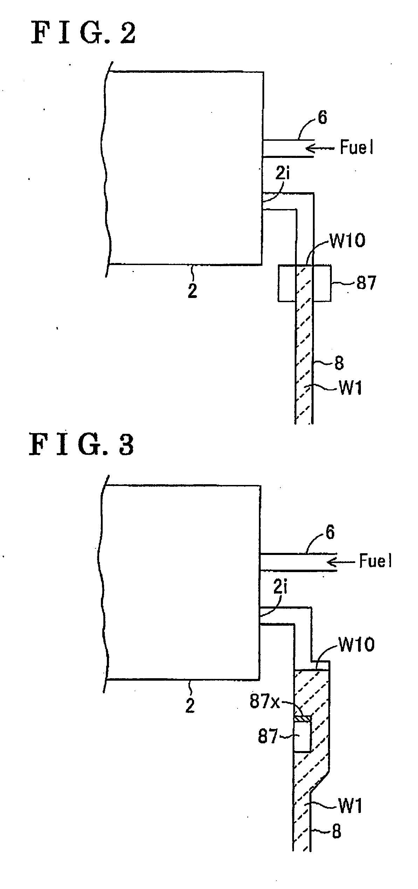

The supply passage 8 is a passage through which the water stored in the tank 4 is supplied from the outlet port 4p of the tank 4 to the evaporating portion 2. A pump 80 functioning as a water supply source is provided at the supply passage 8 so as to send the water In the tank 4 from the outlet port 4p to the evaporating portion 2. A gear pump, for example, is applicable to the pump 80. The pump 80 is driven by an electric motor 82. Because the pump 80 has a high water sealing ability, even when the water is present at a downstream portion 8d of the pump 80 in the supply passage 8 arranged at a downstream side relative to a discharge port 80p of the pump 80, the water is basically restrained from leaking to an upstream portion 8u of the pump 80 in the supply passage 8 arranged at an upstream side of the pump 80. As illustrated in Fig. 1, the downstream portion 8d of the pump 80 is positioned at an upper side of the upstream portion 8u of the pump 80. Immediately after the operation stop of the fuel cell system, as illustrated in Figs. 2 and 3, a water level W10 of water W1 is obtained at a predetermined position of the downstream portion 8d at the downstream side of the discharge port 80p of the pump 80 in the supply passage 8. However, after an elapse of a long time period from the operation stop of the fuel cell system, it is known and confirmed that the water slowly and slightly leaks to the upstream portion 8u and further to the tank 4 at the upstream side of the pump 80 because of the effect of gravity, for example.

According to the present embodiment, the motor 82 driving the pump 80 rotates in both forward and reverse directions. Specifically, the motor 82 is switchable between a normal mode where the motor 82 rotates in the forward direction so as to send the water in the tank 4 from the outlet port 4p to the inlet port 2i of the evaporating portion 2, and a reverse mode where the motor 82 rotates in the reverse direction so as to return the water in the supply passage 8 via the outlet port 4p to the tank 4. That is, the pump 80 driven by the motor 82 is switchable between the normal mode to send the water in the tank 4 to the evaporating portion 2 and the reverse mode to return the water in the supply passage 8 to the tank 4. The control portion 100 controls the motor 82 by means of a drive circuit. Any motors that are rotatable In the forward and reverse directions are applicable to the motor 82. For example, a stepping motor or a DC motor is desirable as the motor 82. The control portion 100 controls the pump 80 via the motor 82. Further, the control portion 100 controls the cathode pump 71, a hot water storage pump 79 (to be explained later), and the fuel pump 60 via respective motors driving the pumps 71, 79, and 60.

In a case where the pump 80 is driven in the normal mode during the operation of the fuel cell system, the water in the tank 4 is sent from the outlet port 4p thereof to the inlet port 2i of the evaporating portion 2 through the supply passage 8. The water is then heated at the evaporating portion 2 to form the water vapor, The water vapor moves to the reforming portion 3 together with the fuel supplied from the fuel passage 6. At this time, the gaseous fuel is desirable; however, the liquid fuel may be acceptable in some cases. The fuel in the reforming portion 3 is reformed by the water vapor so as to form an anode fluid (a hydrogen containing gas). The anode fluid is supplied to the anode 10 of the fuel cell 1 via an anode fluid passage 73. Further, the cathode fluid (an oxygen containing gas, i.e., air in the case 5) is supplied to the cathode 11 of the fuel cell 1 via the cathode fluid passage 70. As a result, the fuel cell 1 generates an electric power. An exhaust gas discharged from the fuel cell 1 is burnt at the combusting portion 105 and the resulting exhaust combustion gas is emitted to the air via the exhaust combustion gas passage 75.

A heat exchanger 76 having a condensation function Is provided at the exhaust combustion gas passage 75. A hot water storage passage 78 connected to a hot water storage tank 77 is connected to the heat exchanger 76. The hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage tank 79 so as to flow through the outward passage 78a and is heated at the heat exchanger 76 by a heat exchange function thereof. The water heated by the heat exchanger 76 is returned to the hot water storage tank 77 from a return port 77i by flowing through the inward passage 78c. Accordingly, the hot water is obtained at the hot water storage tank 77. The water vapor included in the aforementioned exhaust gas from the fuel cell 1 is condensed at the heat exchanger 76 to form condensed water. The condensed water is supplied to a purification portion 43 because of the effect of gravity, for example, via a condensed water passage 42 extending from the heat exchanger 76. Because the purification portion 43 includes a water purifier 43a such as an Ion-exchange resin, an impure substance contained In the condensed water Is removed. The water where the impure substance is removed moves to the tank 4 and is stored thereat. When the pump 80 is driven in the normal mode, the water in the tank 4 is supplied to the evaporating portion 2 at the high temperature via the supply passage 8 and is then supplied to the reforming portion 3 after the water turns to the water vapor at the evaporating portion 2. The water (water vapor) is consumed at the reforming portion 3 in the reforming reaction for reforming the fuel.

Fig. 2 illustrates an example where a capacitive sensor or an electrical resistance sensor is used as a water level sensor 87 provided in the vicinity of the inlet port 2l of the evaporating portion 2 in the supply passage 8. The water level sensor 87 serves as a water sensor. The capacitive sensor detects the water level W10 of the water W1 in the supply passage 8 based on a change in capacitance in cases where the water is present and not present in the supply passage 8. Fig. 3 Illustrates an example where a pressure sensor is used as the water level sensor 87 provided in the vicinity of the inlet port 2i of the evaporating portion 2 in the supply passage 8. The pressure sensor detects a water load based on a water pressure at an upper side of a detecting portion 87x in the supply passage 8. The pressure sensor detects the water level W10 of the water W1 based on a change in the water load in cases where the water is present and not present in the supply passage 8. A detection signal of the water level sensor 87 is input to the control portion 100.

In a case where the power generating operation of the fuel cell system is stopped, the generation of the water vapor at the evaporating portion 2 is not necessary. Thus, the supply of the water in the tank 4 to the supply passage 8 is limited. In this case, the sealing ability of the pump 80 may be excellent. Thus, during a short time period after a time when the power generating operation of the fuel cell system is stopped (i.e., a stop time t10), the water in the downstream portion 8d at the downstream side of the discharge port 80p of the pump 80 in the supply passage 8 is restrained from immediately leaking to the upstream portion 8u at the upstream side of the pump 80. At this time, because of the structure of the pump 80 according to the present embodiment, the water in the downstream portion 8d is configured to leak to the upstream portion 8u by an extremely small amount per unit time in the supply passage 8. Therefore, when a long time period has elapsed after the stop time t10 of the operation of the fuel cell system, the water at the downstream portion 8d slowly and slightly leaks to the upstream portion 8u in the supply passage 8. As a result, a height position of the water level W10 of the water W1 maintained in the supply passage 8 may be gradually lowered from the predetermined position. Further, the water W1 at the downstream portion 8d in the supply passage 8 may evaporate, which leads to the decrease of the height position of the water level W10 0 relative to the predetermined position.

In the aforementioned case, when the power generating operation of the fuel cell system is resumed, timing to supply the water W1 to the evaporating portion 2 may change because of the decrease of the height position of the water level W10 of the water W1. When the timing to supply the water W1 to the evaporating portion 2 is delayed relative to a normal timing, the water supply to the evaporating portion 2 is delayed, which may lead to an extremely high temperature of the reforming portion 3. As a result, coking (i.e., carbonization of fuel) may occur at the reforming portion 3, which may induce a deterioration of the reforming catalyst. On the other hand, when the timing to supply the water W1 to the evaporating portion 2 is faster than the normal timing, excessive water leaking may occur at the evaporating portion 2 and/or the reforming portion 3. At this time, the activity of the reforming catalyst carried on the reforming portion 3 may be reduced.

Therefore, according to the present embodiment, when the power generating operation of the fuel cell system is resumed, the control portion 100 drives the pump 80 before the combusting portion 105 is ignited (i.e., before the ignition of the combusting portion 105 is allowed) in a state where a water accommodating void is formed in the supply passage 8. As a result, the water in the tank 4 is supplied to the supply passage 8 to thereby perform the water level set process. In the water level set process, the control portion 100 monitors the actual water level W10 of the water W1 in the supply passage 8 based on the detection signal of the water level sensor 87 and controls the driving of the pump 80 so that the water level W10 of the water W1 in the supply passage 8 is specified to the predetermined position in the vicinity of the inlet port 2i of the evaporating portion 2. The vicinity of the inlet port 2i corresponds to a point on the supply passage 8 away from the Inlet port 2i by a predetermined distance. Further, in the aforementioned case, the water level set process may be performed after the combusting portion 105 is Ignited (i.e., after the ignition of the combusting portion 105 is allowed).

In a case where the control portion 100 determines that the water is not present in the supply passage 8 based on the detection result of the water level sensor 87, the control portion 100 controls the pump 80 to operate in the normal mode so as to slowly and slightly supply the water in the tank 4 to the supply passage 8. On the other hand, in a case where the control portion 100 determines that the water is present in the supply passage 8 based on the detection result of the water level sensor 87 (i.e., the water level sensor 87 detects the water level), the control portion 100 then controls the pump 80 to stop operating in the normal mode. As a result, the control portion 100 specifies the water level W10 of the water W1 in the supply passage 8 to the predetermined position in the vicinity of the inlet port 2i of the evaporating portion 2.

In a state where an overall length of the supply passage 8 extending from the outlet port 4p of the tank 4 to the inlet port 2i of the evaporating portion 2 is defined to be 100, the aforementioned predetermined distance (which is defined from the inlet port 2i of the evaporating portion 2 to the point on the supply passage 8) is indicated by a value in a range from 0.01 to 15 from the inlet port 2i of the evaporating portion 2 towards the tank 4. For example, the aforementioned predetermined distance is indicated by a value in a range from 0.1 to 10, or from 0.5 to 5.

According to the present embodiment, the control portion 100 controls the water level W10 of the water W1 in the supply passage 8 to the predetermined position in the vicinity of the inlet port 2i of the evaporating portion 2. Then, the control portion 100 allows the ignition of the combusting portion 105 so as to start the operation of the fuel cell system. The fuel pump 60 is driven so that the fuel is supplied to the combusting portion 105 from the fuel passage 6 via the reforming portion 3, the anode 10, and the anode exhaust gas passage 103. In addition, the cathode pump 71 is driven to supply the air to the combusting portion 105 from the cathode fluid passage 70 via the cathode 11 and the cathode exhaust gas passage 104. Afterwards, the ignition portion 35 is turned on so as to ignite the combusting portion 105. In association with the ignition of the combusting portion 105, the combustion occurs so that the evaporating portion 2 is brought into the high temperature and thus the water becomes the water vapor, and the reforming portion 3 Is brought Into the high temperature. The evaporating portion 2 and the reforming portion 3 are at the temperatures suitable for the reforming reaction of the fuel. At this time, according to the present embodiment, the pump 80 is desirably controlled to operate in the reverse mode to thereby return the water in the supply passage 8 to the tank 4 In an early stage of the start of the water level set process. The supply passage 8 therefore becomes empty (i.e., the control portion 100 performs a return process). The empty state of the supply passage 8 corresponds to a basic state (a 0-point state) of the supply passage 8. In this case, a length and a volume of the supply passage 8 up to the aforementioned vicinity of the inlet port 2i of the evaporating portion 2 from the outlet port 4p of the tank 4 are known. Thus, a control of a driving time of the motor 82 and an amount of electric power supply to the motor 82 achieves the water level W10 of the water W1 to be specified to the predetermined position in the vicinity of the inlet port 2i of the evaporating portion 2 in the supply passage 8.

When the water W1 remaining in the supply passage 8 is returned to the tank 4 as mentioned above, grit or dust, for example, is accumulated on a bottom portion of the tank 4. Thus, the grit or dust is restrained from being supplied to the reforming portion 3 via the evaporating portion 2, which further protects the reforming catalyst of the reforming portion 3, for example. Further, in a case where the water is maintained in the supply passage 8 for a long time period, quality of the water (the water W1) in the supply passage 8 may fluctuate. However, according to the present embodiment, the water W1 is returned to the tank 4 so as to be diluted by the water in the tank 4.

According to the present embodiment, when the combusting portion 105 is ignited and the power generating operation of the fuel cell system is started, the control portion 100 intermittently drives the pump 80 so that the water in the supply passage 8 is intermittently supplied to the evaporating portion 2. At this time, the control portion 100 may easily detect the presence of the water because of an intermittent detection signal from the water level sensor 87 during the power generating operation. Thus, a state where the pump 80 is appropriately driven and the water that becomes the water vapor is appropriately supplied to the evaporating portion 2 is intermittently detected by the control portion 100. At this time, however, the pump 80 may be continuously driven so that the water within the supply passage 8 is continuously supplied to the evaporating portion 2. Even in this case, the operation of the pump 80 causes the water In the tank 4 to be supplied to the supply passage 8. In addition, the operation of the pump 80 in the normal mode is controlled so that a target value of the water level W10 of the water W1 is specified to be the predetermined position in the vicinity of the inlet port 2i of the evaporating portion 2 while the actual water level W10 of the water W1 in the supply passage 8 is being monitored on a basis of the detection signal of the water level sensor 87.

According to the present embodiment, a flow meter is not provided at the supply passage 8. This is because, for example, the flow meter is expensive, a foreign substance may be jammed in the flow meter, a wrong detection may be caused by a pulsation of the pump 80, or it may be difficult to measure a minimum flow volume (for example, 3 to 30cc per minute or 0.5 to 30cc per minute) of the water W1 per time unit of the fuel cell system. However, in some cases, the flow meter may be provided at the supply passage 8.

### [Second embodiment]

A second embodiment basically includes the same configuration and effect as those of the first embodiment. Therefore, the second embodiment will be explained with reference to Figs. 1 to 3. According to the second embodiment, the control portion 100 controls the pump 80 to operate in the reverse mode in the early stage of the start of the water level set process to thereby perform the return process returning the water W1 in the supply passage 8 to the tank 4. However, at this time, the supply passage 8 is inhibited from being empty, which is different from the first embodiment. A time to remove the water is reduced according to the second embodiment. After the return process, the control portion 100 controls the drive time of the motor 82 and the amount of electric power supply to the motor 82 so as to drive the pump 80 in the normal mode. The water in the tank 4 is supplied to the supply passage 8 so that the water level W10 of the water W1 is specified to be the predetermined position in the vicinity of the inlet port 2i of the evaporating portion 2 in the supply passage 8. In a case where the water level sensor 87 detects the water level W10 of the water W1 to the predetermined position in the vicinity of the inlet port 2i of the evaporating portion 2 In the supply passage 8, the control portion 100 stops the driving of the pump 80.

### [Third embodiment]

A third embodiment basically includes the same configuration and effect as those of the first and second embodiments. Therefore, the third embodiment will be explained with reference to Figs. 1 to 3. According to the third embodiment, a stepping motor 82s is used as the motor to drive the pump 80. A drive time ta of the stepping motor 82s in the normal mode and a total number of pulses (total pulse number) Na of the electric power supplied to the stepping motor 82a in the normal mode are specified so that the water in the supply passage 8 reaches the position in the vicinity of the inlet port 2i (where the water level is detected by the water level sensor 87) of the evaporating portion 2 in the supply passage 8 in a state where the supply passage 8 is in the empty state (i.e., the basic state).

On the other hand, a drive time to of the stepping motor 82s in the reverse mode and a total number of pulses (total pulse number) No of the electric power supplied to the stepping motor 82a in the reverse mode are specified so that the water W1 supplied up to the position In the vicinity of the inlet port 2i (where the water level is detected by the water level sensor 87) of the evaporating portion 2 in the supply passage 8 is returned to the tank 4 so that the supply passage 8 becomes the empty state (the basic state).

When the power generating operation of the fuel cell system is resumed, the control portion 100 drives the pump 80 in the normal mode before the combusting portion 105 is ignited (i.e., before the ignition of the combusting portion 105 is allowed) in a state where the water accommodating void is formed In the supply passage 8. As a result, the water In the tank 4 is supplied to the supply passage 8 to thereby perform the water level set process. In the water level set process, the control portion 100 monitors the actual water level W10 of the water W1 in the supply passage 8 based on the detection signal of the water level sensor 87 and controls the driving of the pump 80 so that the water level W10 of the water W1 in the supply passage 8 is specified to the predetermined position in the vicinity of the inlet port 2i of the evaporating portion 2. That is, in a case where the control portion 100 determines that the water is not present in the supply passage 8 because of the detection result of the water level sensor 87, the control portion 100 controls the pump 80 to operate In the normal mode so as to slowly and slightly supply the water in the tank 4 to the supply passage 8. On the other hand, in a case where the control portion 100 determines that the water is present in the supply passage 8 because of the detection result of the water level sensor 87, the control portion 100 then controls the pump 80 to stop operating in the normal mode. As a result, the control portion 100 specifies the water level W10 of the water W1 in the supply passage 8 to the predetermined position in the vicinity of the inlet port 2i of the evaporating portion 2.

According to the third embodiment, after the water level W10 of the water W1 in the supply passage 8 is specified to the predetermined position in the vicinity of the inlet port 2i of the evaporating portion 2, the control portion 100 drives the fuel pump 60 so that the fuel is supplied to the reforming portion 3 from the fuel passage 6 and turns on the ignition portion 35 so that the combusting portion 105 Is ignited. Then, in association with the ignition of the combusting portion 105, the reforming portion 3 is heated up to the temperature where the reforming reaction of the fuel is suitable.

### [Fourth embodiment]

A fourth embodiment basically includes the same configuration and effect as those of the first to third embodiments. Therefore, the fourth embodiment will be explained with reference to Figs. 1 to 3. According to the fourth embodiment, in a case where the control portion 100 determines that the water is not present in the supply passage 8 based on the detection result of the water level sensor 87, the control portion 100 drives the pump 80 in the normal mode so as to slowly and slightly supply the water to the supply passage 8. In a case where the control portion 100 determines that the water is present in the supply passage 8 because of the detection result of the water level sensor 87 (i.e., the water level sensor 87 detects the water level), the control portion 100 stops the driving of the pump 80 In the normal mode. As a result, the control portion 100 specifies the water level W10 of the water W1 in the supply passage 8 to the predetermined position in the vicinity of the inlet port 2i of the evaporating portion 2. When the water level sensor 87 is the pressure sensor, the excessively large output value detected by the pressure sensor corresponds to the large water load. In this case, the water level is too high above the detecting portion 87x of the pressure sensor. Thus, in a case where the output value of the pressure sensor is excessively larger than a predetermined value, the control portion 100 drives the motor 82 that is reversely rotatable (the stepping motor 82s) to rotate in the reverse direction and drives the pump 80 in the reverse mode so as to decrease the water W1 in the supply passage 8, which leads to the decrease of the water level W10. Accordingly, the control portion 100 drives the motor 82 to rotate in the forward direction or the reverse direction based on the detection signal of the water level sensor 87 so as to specify the water level W10 of the water W1 In the supply passage 8 to the predetermined position In the vicinity of the inlet port 2i of the evaporating portion 2.

### [Fifth embodiment]

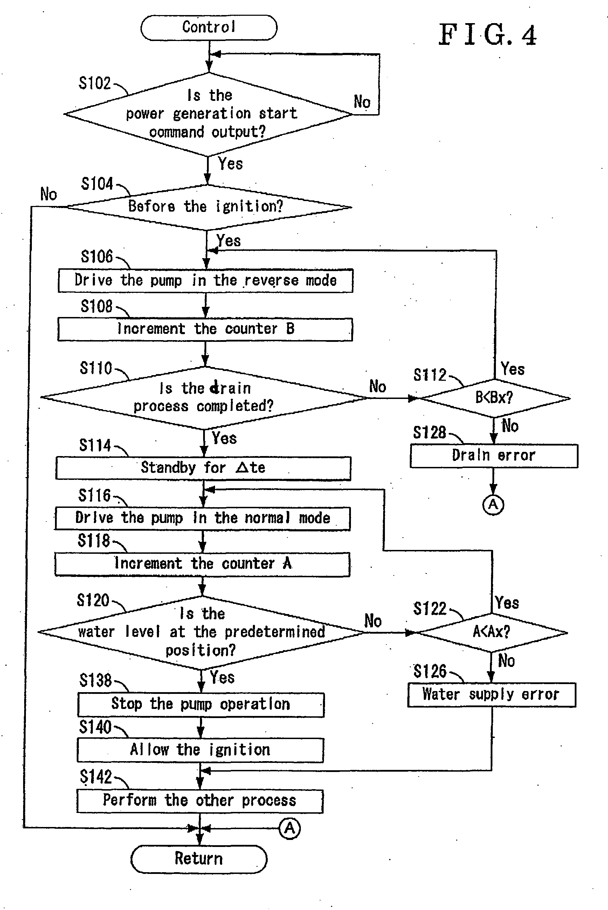

A fifth embodiment will be explained with reference to Fig. 4 illustrating a flow performed by a CPU of the control portion 100. The fifth embodiment basically includes the same configuration and effect as those of the first to fourth embodiments. Therefore, the fifth embodiment will be also explained with reference to Figs. 1 to 3. First, the control portion 100 determines whether or not a command for starting the power generation of the fuel cell system is output in S102. Further, the control portion 100 determines whether or not the combusting portion 105 is in a state before being ignited in S104. When the command for starting the power generation is output (i.e., Yes in S102) and the combusting portion 105 is not yet ignited (i.e., No in S104), the control portion 100 drives the motor 82 to rotate in the reverse direction so as to bring the pump 80 in the reverse mode, thereby performing a drain process of the supply passage 8 in S106. Then, a counter B is incremented by one in S108. When the drain process is not completed (i.e., No in S110), the value of the counter B is compared with a threshold value Bx in S112. When the value of the counter B is smaller than the threshold value Bx (i.e., Yes in S112), the driving of the pump 80 in the reverse mode is continued so as to continue the drain process in S106. In a case where the value of the counter B is equal to or greater than the threshold value Bx even when the drain process is not completed (i.e., No in S112), It is assumed that the supply passage 8 is blocked or the pump 80 is broken, for example. Therefore, the control portion 100 outputs an error signal for the drain process (drain error signal) in S128 so as to return to a main routine. The completion of the drain process is detectable on a basis of the inside of the supply passage 8 that becomes an atmospheric pressure, the drive time of the pump 80 in the reverse mode, or the total pulse number, for example.

In a case where the value of the counter B is smaller than the threshold value Bx and the drain process is completed (i.e., Yes in S110), the drain process is successful. Upon completion of the drain process, a standby for a predetermined time Δte is obtained. Such standby is mainly secured for the switching between the normal mode and the reverse mode of the motor 82. Afterwards, the control portion 100 drives the motor 82 to rotate in the forward direction so as to bring the pump 80 in the normal mode. The water in the tank 4 is therefore supplied to the supply passage 8 in S116 and the counter A is incremented by one in S118. The control portion 100 determines whether or not the water level W10 of the water W1 in the supply passage 8 reaches the predetermined position in the vicinity of the inlet port 2i of the evaporating portion 2 based on the signal from the water level sensor 87 in S120. When the water level W10 of the water W1 in the supply passage 8 does not reach the predetermined position (i.e., No in S120), the value of the counter is compared with a threshold value Ax in S122. When the water level W10 of the water W1 in the supply passage 8 does not reach the predetermined position (i.e., No in S120) and the value of the counter A is smaller than the threshold value Ax (Yes in S122), the pump 80 is continued to be driven in the normal mode in S116. In a case where the value of the counter A is equal to or greater than the threshold value Ax even when the water level sensor 87 is not turned on (i.e., the water level sensor 87 does not detect the water level), i.e., the water level W10 of the water W1 in the supply passage 8 does not reach the predetermined position (i.e., No in S122), the water leakage from the supply passage 8 and/or the breakage of the pump 80, for example, is assumed. Thus, the control portion 100 outputs an error signal for the water supply (water supply error signal) in S126. When it is determined that the water in the supply passage 8 reaches the predetermined position on a basis of the detection result of the water level sensor 87 (i.e., Yes in S120), the control portion 100 stops the rotation of the motor 82 In the forward direction and the driving of the pump 80 in the normal mode in S138. Afterwards, the control portion 100 outputs a signal for allowing the ignition of the combusting portion 105 In S140 so as to perform the other process in S142. The control portion 100 returns to the main routine accordingly.

### [Sixth embodiment]

A sixth embodiment basically includes the same configuration and effect as those of the first to fifth embodiments. Therefore, the sixth embodiment will be explained with reference to Figs. 1 to 3. The stepping motor 82s (see Fig. 1) that is rotatable in the forward direction and the reverse direction is used as the motor to drive the pump 80. The actual water level W10 0 of the water W1 in the supply passage 8 gradually decreases in association with a passage of time from the stop time t10 of the power generation of the fuel cell system. At this time, however, in a case where the passage of time is short, the decrease of the water level W10 of the water W1 in the supply passage 8 is small, which may reduce the necessity to perform the water level set process. Further, because a certain period of time is required to conduct the water level set process, a time period from the command of the power generation start is elongated.

Therefore, at the start of the power generation of the fuel cell system (the fuel cell.1) according to the present embodiment, because the decrease of the water level W10 of the water W1 in the supply passage 8 is small before an elapse of a first predetermined time t11 from the stop time t10 of the power generation of the fuel cell system, the control portion 100 allows the combusting portion 105 to be ignited while not performing the water level set process. At this time, because the water level set process is not conducted, the power generation is immediately started from the time when the command to start the power generation of the fuel cell system is output.

On the other hand, after the elapse of the first predetermined time t11 (for example, a long time period such as three hours or more) from the stop time t10 0 of the power generation of the fuel cell system, the decrease of the water level W10 of the water W1 in the supply passage 8 is large. In this case, the decrease of the water level W10 of the water W1 in the supply passage 8 is not negligible. The control portion 100 desirably highly accurately recognizes the water level W10 of the water W1 in the supply passage 8. Therefore, after the elapse of the first predetermined time t11 from the stop time t10 of the power generation of the fuel cell system, the control portion 100 performs the water level set process. Then, after the water level W10 of the water W1 in the supply passage 8 is specified to the predetermined position, the fuel pump 60 is driven so as to supply the fuel to the reforming portion 3 and to ignite the combusting portion 105.

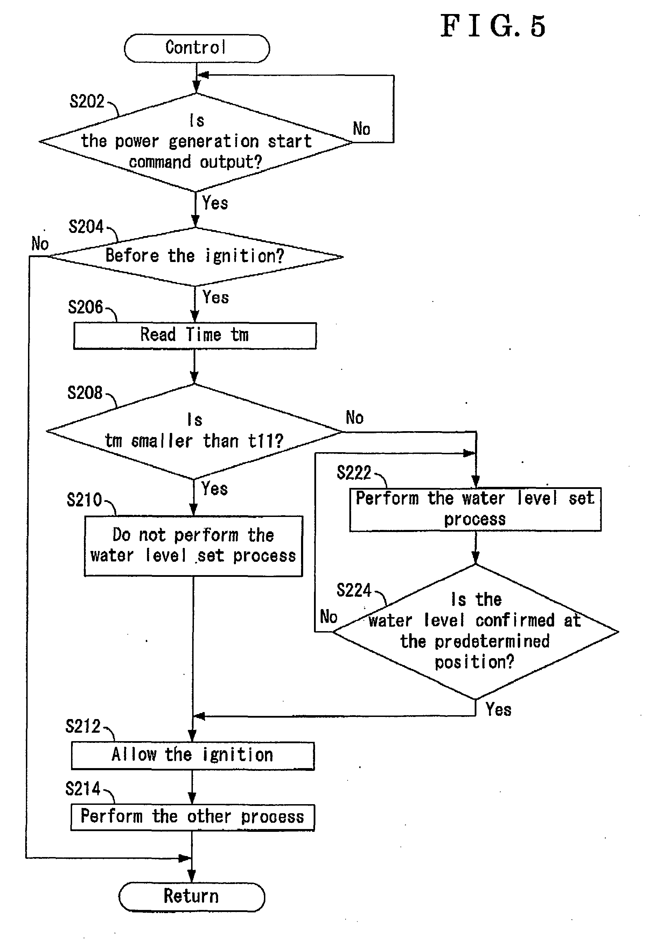

Fig. 5 is an example of a flow performed by the CPU of the control portion 100. The control portion 100 includes a timer function for measuring time. First, the control portion 100 determines whether or not the command to start the power generating operation of the fuel cell system is output in S202. Next, the control portion 100 determines whether or not the combusting portion 105 is in the state before being ignited in S204. In a case where the command to start the power generation of the fuel cell system is output (i.e., Yes in S202) and the combusting portion 105 is not yet ignited (i.e., Yes in S204), the control portion 100 reads an elapsed time tm from the stop time t10, i.e., the time when the power generation of the fuel cell system is previously stopped, In S206. When the elapsed time tm from the stop time t10 is short, the decrease of the water level W10 of the water W1 In the supply passage 8 is small, which results in the small necessity of performing the water level set process.

Therefore, according to the present embodiment, at the start of the power generation of the fuel cell system, the control portion 100 outputs a signal to allow the ignition of the combusting portion 105 in S212 while not performing the water level set process in S210 because the decrease of the water level W10 of the water W1 in the supply passage 8 is small when the elapsed time tm from the stop time t10 is shorter than the first predetermined time t11 (i.e., Yes in S208). Further, the control portion 100 performs the other process in S214 and then returns to the main routine. At this time, because the water level set process is not performed, the power generation of the fuel cell system is immediately performed after the command to start the power generation is output.

On the other hand, when the elapsed time tm from the stop time t10 is equal to or longer than the first predetermined time t11 (i.e., No, in S208), it is assumed that the decrease of the water level W10 of the water W1 In the supply passage 8 is large. At this time, the decrease of the water level W10 of the water W1 in the supply passage 8 is not negligible. Therefore, until it is confirmed that the water level W10 of the water W1 in the supply passage 8 reaches the predetermined position in the vicinity of the inlet port 2i of the evaporating portion 2 based on the detection result of the water level sensor 87, the control portion 100 continues to perform the water level set process in S222 and S224. Then, when it is confirmed that the water level sensor 87 detects the water level so that the water level W10 of the water W1 in the supply passage 8 reaches the predetermined position in the vicinity of the inlet port 2i (i.e., Yes in S224), the control portion 100 outputs the signal to allow the ignition of the combusting portion 105 in S212. Further, the control portion 100 performs the other process in S214 to return to the main routine. In this case, because the water level set process is performed, the water level W10 of the water W1 in the supply passage 8 reaches the predetermined position in the vicinity of the inlet port 2i of the evaporating portion 2.

### [Seventh embodiment]

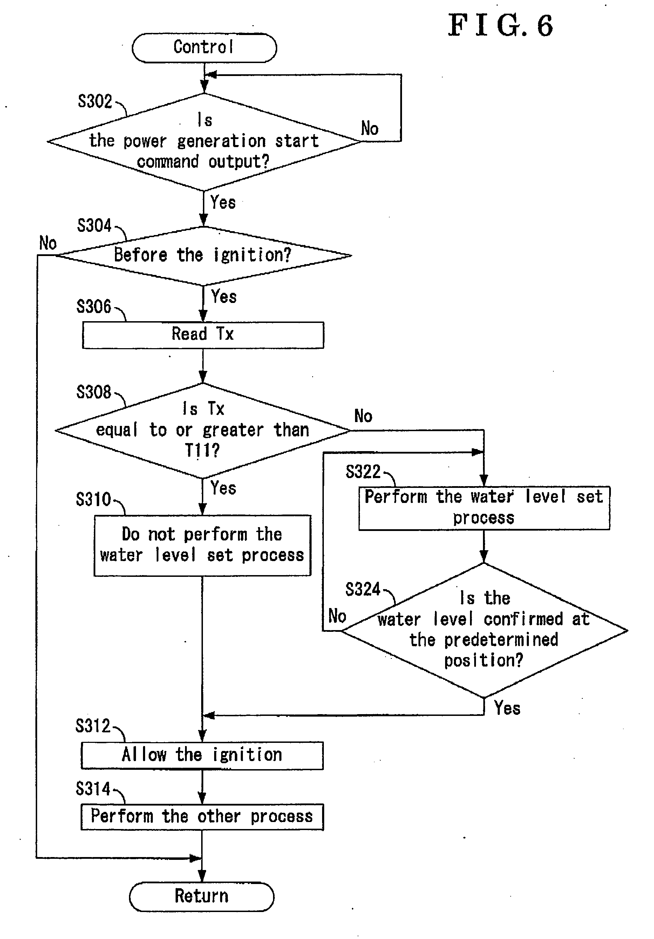

A seventh embodiment will be explained with reference to Fig. 6. The seventh embodiment basically includes the same configuration and effect as those of the first to sixth embodiments. Therefore, the seventh embodiment will be also explained with reference to Figs. 1 to 3. In a state where the power generation of the fuel cell system is stopped, the temperature at the reforming portion 3 decreases and the actual water level W10 of the water W1 in the supply passage 8 decreases in association with the elapse of time from the stop time t10. Therefore, the reference temperature sensor 33 detecting the reference temperature of the reforming portion 3 is provided at the reforming portion 3 so that the reference temperature of the reforming portion 3 is defined to be a parameter. A detection signal of the reference temperature sensor 33 is input to the control portion 100. In a case where a temperature (a detection temperature) Tx detected by the reference temperature sensor 33 is equal to or greater than a threshold temperature T11, at the start of the power generation of the fuel cell system, it is considered that the reforming portion 3 still includes a residual heat so as to be the high temperature. In addition, it is considered that the elapsed time from the stop time t10 is short and the decrease of the water level W10 of the water W1 in the supply passage 8 is small so that the decrease is negligible. Thus, the control portion 100 does not perform the water level set process and allows the ignition of the combusting portion 105.

On the other hand, in a case where the detection temperature Tx is lower than the threshold temperature T11, it is regarded that the detection temperature Tx of the reforming portion 3 is relatively low and the elapsed time from the stop time t10 is long so that the decrease of the water level W10 of the water W1 in the supply passage 8 is large. Thus, the control portion 100 performs the water level set process to specify the water level W10 of the water W1 in the supply passage 8 to the predetermined position in the vicinity of the inlet port 2i of the evaporating portion 2. Thereafter, the control portion 100 allows the ignition of the combusting portion 105. At this time, depending on types of the reforming portion 3, the threshold temperature T11 may range from 100°C to 110 °C. However, the threshold temperature T11 Is not limited to fall within the aforementioned range.

Fig. 6 Is an example of a flow performed by the CPU of the control portion 100. As illustrated in Fig. 6, the control portion 100 determines whether or not the command to start the power generating operation of the fuel cell system is output in S302. Next, the control portion 100 determines whether or not the combusting portion 105 is in the state before being ignited in S304. In a case where the command to start the power generation of the fuel cell system is output (i.e., Yes in S302) and the combusting portion 105 is not yet ignited (i.e., Yes in S304), the control portion 100 reads the detection temperature Tx of the reference temperature sensor 33 detecting the temperature at the inside of the reforming portion 3 in S306. When the detection temperature Tx is high, the elapsed time tm from the stop time t10, i.e., the time when the power generation of the fuel cell system is previously stopped, is short. At this time, the decrease of the water level W10 of the water W1 in the supply passage 8 is extremely small so that the necessity to newly perform the water level set process Is small. Therefore, according to the present embodiment, at the start of the power generation of the fuel cell system, the control portion 100 allows the Ignition of the combusting portion 105 In S312 while not performing the water level set process when the detection temperature Tx of the reference temperature sensor 33 is equal to or greater than the threshold temperature T11 (i.e., Yes in S308). The control portion 100 then performs the other process in S314 to thereby return to the main routine. At this time, because the water level set process is not performed, the power generation of the fuel cell system is immediately performed from the time when the command to start the power generation of the fuel cell system is output.

On the other hand, in a case where the detection temperature Tx of the reference temperature sensor 33 is smaller than the threshold temperature T11 (i.e., No in S308), it is assumed that the elapsed time from the stop time t10 is relatively long and therefore the decrease of the water level W10 of the water W1 in the supply passage 8 is large so as not to be negligible. Therefore, until the water level sensor 87 is confirmed to be turned on, i.e., until a state where the water level W10 of the water W1 in the supply passage 8 reaches the predetermined position in the vicinity of the inlet port 2i of the evaporating portion 2 is confirmed, the control portion 100 performs the water level set process in S322 and S324. Afterwards, when the turn-on of the water level sensor 87 is confirmed, i.e., it is confirmed that the water level W10 of the water W1 in the supply passage 8 reaches the predetermined position (i.e., Yes In S324), the control portion 100 allows the ignition of the combusting portion 105 in S312 and performs the other process in S314 to thereafter return to the main routine. At this time, because the water level set process is performed, the water level W10 of the water W1 in the supply passage 8 reaches the predetermined position in the vicinity of the inlet port 2i of the evaporating portion 2.

### [Eighth embodiment]

An eighth embodiment basically includes the same configuration and effect as those of the first to seventh embodiments. Therefore, the eighth embodiment will be explained with reference to Figs. 1 to 3. The eighth embodiment further includes the following effects. The length and volume of the supply passage 8 in a state where the supply passage 8 is empty are known because the length and the volume of the supply passage 8 depend on a length and an inner diameter thereof, for example. In the water level set process, the rotational speed of the motor 82 is changeable when the water in the tank 4 is supplied to the supply passage 8. Specifically, in a state where the passage length of the supply passage 8 from the outlet port 4p of the tank 4 to a position of the water level detected by the water level sensor 87 is defined to be 100 while the supply passage 8 is empty, the rotational speed of the motor 82 (the stepping motor 82) is defined to be Va from the outlet port 4p of the tank 4 to an intermediate position of the passage length (for example, a value within a range from 50 to 95 from the outlet port 4p) and is defined to be Vc in a portion beyond the intermediate position of the passage length (i.e., towards the position of the water level detected by the water level sensor 87). At this time, the rotational speed Vc is lower than the rotational speed Va. A value obtained by dividing the rotational speed Vc by the rotational speed Va is a value within a range from 0.1 to 0.9. In this case, when the water flowing through the supply passage 8 approaches the water level sensor 87, the control portion 100 performs a deceleration process for decelerating the rotational speed of the motor 82 (the stepping motor 82) in a stepwise manner (i.e., two, three, or more than three steps). The speed to supply the water (water supply speed) is configured to be decelerated while the water in the supply passage 8 becomes closer to the water level sensor 87. Thus, the inertia force of the water flowing through the supply passage 8 is reduced in the vicinity of the water level sensor 87, thereby restraining the excessive supply of the water. Accordingly, the water in the tank 4 is restrained from excessively entering the inlet port 2i of the evaporating portion 2 before the combusting portion 105 is ignited. As a result, the excessive water leakage at the reforming portion 3 is restrained. While the water flowing through the supply passage 8 is approaching the water level sensor 87, the control portion 100 may control the rotational speed of the motor 82 (the stepping motor 82s) to be continuously and gradually reduced.

### [Ninth embodiment]

A ninth embodiment basically includes the same configuration and effect as those of the first to eighth embodiments. Therefore, the ninth embodiment will be explained with reference to Figs. 1 to 3. The ninth embodiment further includes the following effects. The length and volume of the supply passage 8 in a state where the supply passage 8 is empty are known because the length and the volume of the supply passage 8 depend on the length and the inner diameter thereof, for example. When the water in the tank 4 is supplied to the supply passage 8 during the water level set process, the forward rotation of the motor 82 is temporarily stopped. Specifically, in a state where the passage length of the supply passage 8 from the outlet port 4p of the tank 4 to the water level sensor 87 is defined to be 100 while the supply passage 8 is empty, the motor 82 is controlled so as to continuously rotate in the forward direction in an area from the outlet port 4p of the tank 4 to an intermediate position of the passage length (for example, a value within a range from 30 to 80 from the outlet port 4p). Afterwards, the motor 82 (the stepping motor 82c) Is stopped for a predetermined time so as to temporarily stop the driving of the pump 80 (i.e., the water supply performed by the pump 80 is temporarily stopped). After the elapse of the predetermined time, the motor 82 is controlled so as to again rotate in the forward direction and bring the pump 80 to be driven in the normal mode to thereby resume the water supply to the supply passage B. An abort process is performed in the aforementioned manner. In this case, even when air foam is included in the supply passage 8, the temporary stop of the water supply to the supply passage 8 and the restart thereof may expect the air foam to float at an upper side of the water surface of the supply passage 8. In this case, while avoiding an influence of the air foam, the water level W10 of the water W1 in the supply passage 8 is highly accurately specified to the predetermined position in the vicinity of the inlet port 2i of the evaporating portion 2. After the abort process, the rotational speed of the motor 82 may be smaller than the rotational speed before the abort process. This is for accurately specifying the water level W10 of the water W1 to the predetermined position.

The aforementioned first to ninth embodiments may be appropriately modified. The heating portion 40 is provided at the tank 4 according to the first to ninth embodiments. Alternatively, the heating portion 40 may be provided at the condensation water passage 42. Further alternatively, in a warm-temperature region, for example, the heating portion 40 may be eliminated. The fuel cell 1 may be a polymer electrolyte fuel cell (PEFC; an operation temperature is 70 to 100 °C, for example), a phosphoric acid fuel cell (PAFC), or any other types of fuel cells. That is, the fuel cell at least includes the evaporating portion where the water vapor is formed from the water so as to reform the fuel in gas phase or liquid phase by the water vapor. The detection principle of the water level sensor 87 is not specifically limited. For example, a physical sensor or a chemical sensor that detects the water (the water level) is acceptable. The fuel may be city gas, propane gas, biogas, LPG, CNG, kerosene, gasoline or alcohol, for example. The water supply source is not limited to the pump 80 driven by the motor and may be any member having the water transport ability.
A fuel cell system includes a fuel cell (1), a combusting portion (105), an evaporating portion (2) including an inlet port (2i), a reforming portion (3), a tank (4) including an outlet port (4p), a supply passage (8), a water sensor (87) detecting a water level of water positioned away from the inlet port by a predetermined distance, a water supply source (80), and a control portion (100). At a start of a power generation, the control portion instructs the water supply source to operate so that the water in the tank is supplied to the supply passage in a state where a water accommodating void is formed at the supply passage. The control portion performs a water level set process so that the water level In the supply passage is specified at a position away from the inlet port by the predetermined distance while monitoring the water level based on a detection signal of the water sensor.

## Claims

1. A fuel cell system comprising:
a fuel cell (1) including an anode (10) and a cathode (11) and generating an electric power In a state where an anode fluid is supplied to the anode (10) while a cathode fluid is supplied to the cathode (11);
a combusting portion (105) starting a combustion by an ignition;
an evaporating portion (2) including an inlet port (2i) and generating a water vapor by evaporating water by a heat of the combusting portion (105);
a reforming portion (3) forming the anode fluid by reforming a fuel by using the heat of the combusting portion (105) and the water vapor generated at the evaporating portion (2);
a tank (4) including an outlet port (4p) and storing the water supplied to the evaporating portion (2);
a supply passage (8) connecting the outlet port (4p) of the tank (4) and the inlet port (2i) of the evaporating portion (2) and allowing a supply of the water to the evaporating portion (2) from the tank (4) via the inlet port (2i) of the evaporating portion (2);
a water sensor (87) arranged at the supply passage (8) and detecting a water level (W10) of the water positioned away from the inlet port (2i) of the evaporating portion (2) by a predetermined distance;
a water supply source (80) provided at the supply passage (8) and driven to transmit the water in the tank (4) to the evaporating portion (2) to generate the water vapor; and
a control portion (100) controlling the water supply source (80),
wherein, at a start of a power generation of the fuel cell (1), the control portion (100) instructs the water supply source (80) to operate so that the water in the tank (4) is supplied to the supply passage (8) in a state where a water accommodating void is formed at the supply passage (8), and the control portion (100) performs a water level set process by controlling the operation of the water supply source (80) so that the water level of the water in the supply passage (8) is specified at a position by the predetermined distance away from the inlet port (2i) of the evaporating portion (2), while monitoring the water level of the water in the supply passage (8) based on a detection signal of the water sensor (87).

2. The fuel cell system according to claim 1, wherein the control portion (100) performs a process to return the water in the supply passage (8) to the tank (4) by instructing the water supply source (80) to operate in a reverse mode at a start of the water level set process.

3. The fuel cell system according to either claim 1 or 2, wherein at the start of the power generation of the fuel cell (1), before an elapse of a first predetermined time (t11) from a time (t10) when the fuel cell system stops the power generation, the control portion (100) allows the ignition of the combusting portion (105) without performing the water level set process, and after the elapse of the first predetermined time (t11) from the time (t10) when the fuel cell system stops the power generation, the control portion (100) performs the water level set process and then allows the ignition of the combusting portion (105).

4. The fuel cell system according to either claim 1 or 2, further comprising a reference temperature sensor (33) detecting a reference temperature of the reforming portion (3), wherein at the start of the power generation of the fuel cell (1), the control portion (100) allows the ignition of the combusting portion (105) without performing the water level set process In a case where a temperature (Tx) detected by the reference temperature sensor (33) is equal to or greater than a threshold temperature (T11), and the control portion (100) performs the water level set process and then allows the ignition of the combusting portion (105) in a case where the temperature (Tx) detected by the reference temperature sensor (33) is smaller than the threshold temperature (T11).

5. The fuel cell system according to any one of claims 1 through 4, wherein the control portion (100) performs a deceleration process decelerating a water supply speed of the water supply source (80) while the water level set process is being performed.

6. The fuel cell system according to any one of claims 1 through 4. wherein the control portion (100) performs an abort process to temporarily stop a water supply performed by the water supply source (80) and then to resume the water supply while the water level set process is being performed.

7. The fuel cell system according to any one of claims 1 through 6, wherein the predetermined distance corresponds to a distance from the inlet port (2i) of the evaporating portion (2) to a point on the supply passage (8), and the predetermined distance is defined to be in a range from 0.01 to 15 in a state where an entire length of the supply passage (8) from the inlet port (2i) of the evaporating portion (2) to the outlet port (4p) of the tank (4) is defined to be 100.

8. The fuel cell system according to any one of claims 1 through 7, wherein the control portion (100) performs the water level set process before the combusting portion (105) is ignited.

## Patentansprüche

1. Brennstoffzellensystem, mit:
einer Brennstoffzelle (**1**), die eine Anode (**10**) und eine Kathode (**11**) umfasst und die elektrische Energie in einem Zustand erzeugt, in dem ein Anodenfluid zu der Anode (**10**) zugeführt wird, während ein Kathodenfluid zu der Kathode (**11**) zugeführt wird;
einem Verbrennungsabschnitt (**105**), der eine Verbrennung durch eine Zündung startet;
einem Verdampfungsabschnitt (**2**) umfassend einen Einlassanschluss (**2i**), der Wasserdampf durch Verdampfen von Wasser durch Wärme des Verbrennungsabschnitts (**105**) erzeugt;
einem Reformerabschnitt (**3**), der das Anodenfluid durch Reformieren von Kraftstoff durch Verwenden der Wärme des Verbrennungsabschnitts (**105**) und dem in dem Verdampfungsabschnitt (**2**) erzeugten Wasserdampf bildet;
einem Tank (**4**) umfassend einen Auslassanschluss (**4p**), der das zu dem Verdampfungsabschnitt (**2**) zugeführte Wasser speichert;
einer Zufuhrpassage (**8**), die den Auslassanschluss (**4p**) des Tanks (**4**) und den Einlassanschluss (**2i**) des Verdampfungsabschnitts (**2**) verbindet, und eine Zufuhr des Wassers zu dem Verdampfungsabschnitt (**2**) von dem Tank (**4**) über den Einlassanschluss (**2i**) des Verdampfungsabschnitts (**2**) ermöglicht;
einem Wassersensor (**87**), der an der Zufuhrpassage (**8**) angeordnet ist und einen Wasserpegel (**W10**) erfasst, der sich von dem Einlassanschluss (**2i**) des Verdampfungsabschnitts (**2**) um eine vorbestimmte Distanz weg befindet;
einer Wasserzufuhrquelle (**80**), die an der Zufuhrpassage (**8**) bereitgestellt ist und angesteuert wird, um das Wasser in dem Tank (**4**) zu dem Verdampfungsabschnitt (**2**) zu übertragen, um den Wasserdampf zu erzeugen; und
einem Steuerabschnitt (**100**), der die Wasserzufuhrquelle (**80**) steuert,
wobei bei einem Start einer Energieerzeugung der Brennstoffzelle (**1**) der Steuerabschnitt (**100**) die Wasserzufuhrquelle (**80**) anweist, um derart zu arbeiten, dass das Wasser in dem Tank (**4**) zu der Zufuhrpassage (**8**) in einem Zustand zugeführt wird, in dem ein Wasseraufnahmeleerraum an der Zufuhrpassage (**8**) ausgebildet ist, und der Steuerabschnitt (**100**) einen Wasserpegeleinstellprozess durch Steuern der Operation der Wasserzufuhrquelle (**80**) durchführt, sodass der Wasserpegel des Wassers in der Zufuhrpassage (**8**) an einer Position um die vorbestimmte Distanz weg von dem Einlassanschluss (**2i**) des Verdampfungsabschnitts (**2**) spezifiziert ist, während der Wasserpegel des Wassers in der Zufuhrpassage (**8**) basierend auf einem Erfassungssignal des Wassersensors (**87**) überwacht wird.

2. Brennstoffzellensystem gemäß Anspruch 1, wobei der Steuerabschnitt (**100**) einen Prozess durchführt, um das Wasser in der Zufuhrpassage (**8**) zu dem Tank (**4**) zurückzubringen, durch Anweisen der Wasserzufuhrquelle (**80**), um bei einem Start des Wasserpegeleinstellprozesses in einem umgekehrten Modus zu arbeiten.

3. Brennstoffzellensystem gemäß Anspruch 1 oder 2, wobei bei dem Start der Energieerzeugung der Brennstoffzelle (**1**), vor Verstreichen einer ersten vorbestimmten Zeit (**t11**) von einem Zeitpunkt (**t10**), wenn das Brennstoffzellensystem die Energieerzeugung stoppt, der Steuerabschnitt (**100**) die Zündung des Verbrennungsabschnitts (**105**) ohne Durchführen des Wasserpegeleinstellprozesses zulässt, und nach dem Verstreichen der ersten vorbestimmten Zeit (**t11**) von dem Zeitpunkt (**t10**), wenn das Brennstoffzellensystem die Energieerzeugung stoppt, der Steuerabschnitt (**100**) den Wasserpegeleinstellprozess durchführt, und anschließend das Zünden des Verbrennungsabschnitts (**105**) zulässt.

4. Brennstoffzellensystem gemäß Anspruch 1 oder 2, weiterhin mit einem Referenztemperatursensor (**33**), der eine Referenztemperatur des Reformerabschnitts (**3**) erfasst, wobei bei dem Start der Energieerzeugung der Brennstoffzelle (**1**) der Steuerabschnitt (**100**) die Zündung des Verbrennungsabschnitts (**105**) ohne Durchführen des Wasserpegeleinstellprozesses in einem Zustand zulässt, in dem eine durch den Referenztemperatursensor (**33**) erfasste Temperatur (**Tx**) größer oder gleich einer Schwellenwerttemperatur **(T11)** ist, und der Steuerabschnitt (**100**) den Wasserpegeleinstellprozess durchführt und anschließend die Zündung des Verbrennungsabschnitts (**105**) in einem Fall zulässt, in dem die durch den Referenztemperatursensor (**33**) erfasste Temperatur (**Tx**) kleiner als die Schwellenwerttemperatur (**T11**) ist.

5. Brennstoffzellensystem gemäß einem der Ansprüche 1 bis 4, wobei der Steuerabschnitt (**100**) einen Verzögerungsprozess zum Verzögern einer Wasserzuführgeschwindigkeit der Wasserzufuhrquelle (**80**) durchführt, während der Wasserpegeleinstellprozess durchgeführt wird.

6. Brennstoffzellensystem gemäß einem der Ansprüche 1 bis 4, wobei der Steuerabschnitt (**100**) einen Abbruchprozess zum temporären Stoppen einer durch die Wasserzufuhrquelle (**80**) durchgeführten Wasserzufuhr durchführt, und anschließend die Wasserzufuhr wieder aufnimmt, während der Wasserpegeleinstellprozess durchgeführt wird.

7. Brennstoffzellensystem gemäß einem der Ansprüche 1 bis 6, wobei die vorbestimmte Distanz einer Distanz von dem Einlassanschluss (**2i**) des Verdampfungsabschnitts (**2**) zu einem Punkt an der Zuführpassage (**8**) entspricht, und die vorbestimmte Distanz definiert ist, um in einem Bereich von 0,01 bis 15 in einem Zustand zu liegen, in dem eine Gesamtlänge der Zuführpassage (**8**) von dem Einlassanschluss (**2i**) des Verdampfungsabschnitts (**2**) zu dem Auslassanschluss (**4p**) des Tanks (**4**) definiert ist, um 100 zu betragen.

8. Brennstoffzellensystem gemäß einem der Ansprüche 1 bis 7, wobei der Steuerabschnitt (**100**) den Wasserpegeleinstellprozess durchführt, bevor der Verbrennungsabschnitt (**105**) gezündet wird.

## Revendications

1. Système de pile à combustible comprenant :
une pile à combustible (1) comportant une anode (10) et une cathode (11) et générant une énergie électrique dans un état où un fluide d'anode est alimenté à l'anode (10) tandis qu'un fluide de cathode est alimenté à la cathode (11) ;
une partie de combustion (105) démarrant une combustion par un allumage ;
une partie d'évaporation (2) comportant un orifice d'entrée (2i) et générant une vapeur d'eau en évaporant de l'eau par la chaleur de la partie de combustion (105) ;
une partie de reformage (3) formant le fluide d'anode par reformage d'un combustible en utilisant la chaleur de la partie de combustion (105) et la vapeur d'eau générée au niveau de la partie d'évaporation (2) ;
un réservoir (4) comportant un orifice de sortie (4p) et stockant l'eau alimentée à la partie d'évaporation (2) ;
un passage d'alimentation (8) reliant l'orifice de sortie (4p) du réservoir (4) et l'orifice d'entrée (2i) de la partie d'évaporation (2) et permettant une alimentation de l'eau à la partie d'évaporation (2) à partir du réservoir (4) via l'orifice d'entrée (2i) de la partie d'évaporation (2) ;
un capteur d'eau (87) disposé au niveau du passage d'alimentation (8) et détectant un niveau d'eau (W10) de l'eau positionnée loin de l'orifice d'entrée (2i) de la partie d'évaporation (2) d'une distance prédéterminée ;
une source d'alimentation en eau (80) prévue au niveau du passage d'alimentation (8) et actionnée pour transmettre l'eau dans le réservoir (4) à la partie d'évaporation (2) pour générer la vapeur d'eau ; et
une partie de commande (100) commandant la source d'alimentation en eau (80),
où, au début d'une production d'énergie de la pile à combustible (1), la partie de commande (100) donne une instruction à la source d'alimentation en eau (80) pour fonctionner de sorte que l'eau dans le réservoir (4) soit alimentée au passage d'alimentation (8) dans un état où une cavité de réception d'eau est formée au niveau du passage d'alimentation (8), et la partie de commande (100) exécute un processus de réglage de niveau d'eau en commandant le fonctionnement de la source d'alimentation en eau (80) de sorte que le niveau d'eau de l'eau dans le passage d'alimentation (8) soit spécifié à une position par la distance prédéterminée éloignée de l'orifice d'entrée (2i) de la partie d'évaporation (2), tout en surveillant le niveau d'eau de l'eau dans le passage d'alimentation (8) sur la base d'un signal de détection du capteur d'eau (87).

2. Système de pile à combustible selon la revendication 1, dans lequel la partie de commande (100) exécute un processus pour renvoyer l'eau dans le passage d'alimentation (8) au réservoir (4) en donnant une instruction à la source d'alimentation en eau (80) afin de fonctionner dans un mode inverse au démarrage du processus de réglage de niveau d'eau.

3. Système de pile à combustible selon la revendication 1 ou 2, dans lequel au début de la production d'énergie de la pile à combustible (1), avant l'écoulement d'un premier temps prédéterminé (t11) à partir d'un temps (t10) lorsque le système de pile à combustible arrête la production d'énergie, la partie de commande (100) permet l'allumage de la partie de combustion (105) sans exécuter le processus de réglage de niveau d'eau, et après l'écoulement du premier temps prédéterminé (t11) à partir du temps (t10) où le système de pile à combustible arrête la production d'énergie, la partie de commande (100) exécute le processus de réglage de niveau d'eau et permet par la suite l'allumage de la partie de combustion (105).

4. Système de pile à combustible selon la revendication 1 ou 2, comprenant en outre un capteur de température de référence (33) détectant une température de référence de la partie de reformage (3), où au début de la production d'énergie de la pile à combustible (1), la partie de commande (100) permet l'allumage de la partie de combustion (105) sans exécuter le processus de réglage de niveau d'eau dans le cas où une température (Tx) détectée par le capteur de température de référence (33) est supérieure ou égale à une température seuil (T11), et la partie de commande (100) exécute le processus de réglage de niveau d'eau et permet par la suite l'allumage de la partie de combustion (105) dans le cas où la température (Tx) détectée par le capteur de température de référence (33) est inférieure à la température seuil (T11).

5. Système de pile à combustible selon l'une quelconque des revendications 1 à 4, dans lequel la partie de commande (100) exécute un processus de décélération décélérant une vitesse d'alimentation en eau de la source d'alimentation en eau (80) lorsque le processus de réglage de niveau d'eau est en cours d'exécution.

6. Système de pile à combustible selon l'une quelconque des revendications 1 à 4, dans lequel la partie de commande (100) exécute un processus d'interruption pour arrêter momentanément une alimentation en eau effectuée par la source d'alimentation en eau (80) et pour reprendre par la suite l'alimentation en eau lorsque le processus de réglage de niveau d'eau est en cours d'exécution.

7. Système de pile à combustible selon l'une quelconque des revendications 1 à 6, dans lequel la distance prédéterminée correspond à une distance depuis l'orifice d'entrée (2i) de la partie d'évaporation (2) jusqu'à un point situé sur le passage d'alimentation (8), et la distance prédéterminée est définie pour se situer dans une plage allant de 0,01 à 15 dans un état où une longueur totale du passage d'alimentation (8) depuis l'orifice d'entrée (2i) de la partie d'évaporation (2) jusqu'à l'orifice de sortie (4p) du réservoir (4) est définie pour être égale à 100.

8. Système de pile à combustible selon l'une quelconque des revendications 1 à 7, dans lequel la partie de commande (100) exécute le processus de réglage de niveau d'eau avant que la partie de combustion (105) ne soit allumée.
